# EUROPEAN PATENT SPECIFICATION

(11) **EP 0 951 786 B1**
(45) Date of publication and mention of the grant of the patent: **13.04.2005**
(21) Application number: 97908363.1
(22) Date of filing: 18.03.1997
(51) Int. Cl.: H04Q 3/00, H04M 15/00

(54) **TELECOMMUNICATIONS NETWORK WITH STORE FOR DATA ASSOCIATED WITH AN AREA CODE**
FERNMELDENETZ MIT EINEM SPEICHER FÜR DATEN DIE MIT EINEM GEBIETSKODE VERBUNDEN SIND
RESEAU DE TELECOMMUNICATIONS A ENREGISTREMENT DE DONNEES ASSOCIEES A UN CODE DE ZONE

(30) Priority: 27.03.1996 EP 96302112
(43) Date of publication of application: 27.10.1999
(73) Proprietor: BRITISH TELECOMMUNICATIONS public limited company, London EC1A 7AJ (GB)
(72) Inventor: MORLEY, Michael, Charles, Suffolk IP3 0PU (GB); STURGESS, Ian, Charles, Clifford 12 Wadhurst Road, Suffolk IP3 8RS (GB); GARDNER, David, Stephen, Suffolk IP4 1NP (GB)
(86) International application number: PCT/GB1997/000751
(87) International publication number: WO 1997/036432

(56) References cited:
- EP-A- 0 327 472
- EP-A- 0 491 497
- WO-A-96/03000
- US-A- 5 148 474
- US-A- 5 333 180

## Description

The present invention relates to telecommunications networks and more particularly to services provided by such networks.

The public switched telephone network (PSTN) is capable of providing customers with many services other than basic telephony. Digital networks such as that provided by BT in the United Kingdom have the ability to effect call connection very quickly. Thus dual tone multi frequency (DTMF) signalling from customers before, during or on termination of telephone calls can be used to connect special services. Further, special service platforms may be called by customers requesting connection to specified network numbers to provide additional services.

One service provided by the PSTN in the United Kingdom allows customers to identify a calling party's telephone number either using a display unit which is signalled when a call is offered or by dialling a code to be advised of the latest call made. The customer may wish to know more about the source of the received call prior to making a return call as a result of the caller display service or as a result of a mailbox or answering machine message requests a return call.

Similarly, prior to making a call to a known telephone number the customer may wish to consider the likely cost involved or special factors associated with the telephone number such as the type of destination.

USP5333180 discloses a voice message service in which a recorded message is preceded by an introductory phrase. The dialled country code is used to determine the language of the preliminary announcement. EP 491497 and US 5148474 both relate to billing systems where call charge rate may vary during the course of the call. Both of these systems use voice announcement to advise callers of potential charging liabilities.

WO 9603000 again uses voice announcement to notify a caller of charge variations during the course of a call and to require signalling from the caller to confirm acceptance of the charge.

According to the present invention there is provided a telecommunications network including means to store data identifying a feature associated with at least a code portion of a telephone number, means responsive to signals transmitted from a customer line which signals identify the code portion, characterised in that the network further includes means to decode the data into a respective description of the feature associated with the transmitted code and means to transmit to the customer line an audible description of the decoded feature.

Preferably, the description associated with the code portion identifies a geographic location. Alternatively or additionally a charging rate identifier may be provided such that customers may be informed of the cost of making a call to the specified code. Further identifiers may include network type identity such that calls to a mobile network which may be insecure for certain purposes may be avoided.

Where the decoded feature is a charging rate identifier or denotes a call to a special service such as to an insecure network, control means may require confirmation signals to be transmitted from the customer line before completion of a call through the network.

In a further development of the invention, the data stored may be associated with a complete telephone number. Thus using a known telephone number a calling customer may obtain a post code or ZIP code for the address associated therewith.

A telecommunications network in accordance with the invention will now be described by way of example only with reference to the accompanying drawings of which:
Figure 1 is a block schematic diagram of the telecommunications network;
Figure 2 is a schematic diagram showing an interpretation of the network elements of Figure 1.
Figure 3 is a service flow diagram in respect of an automated code decoder service;
Figure 4 is a service flow diagram in respect of an automated number decoder service;
Figure 5 is a service flow diagram of a network or call charge warning service; and
Figure 6 is a schematic representation of data storage used by a service control point or intelligent peripheral of figure 1 to provide the services of figures 3 to 5.

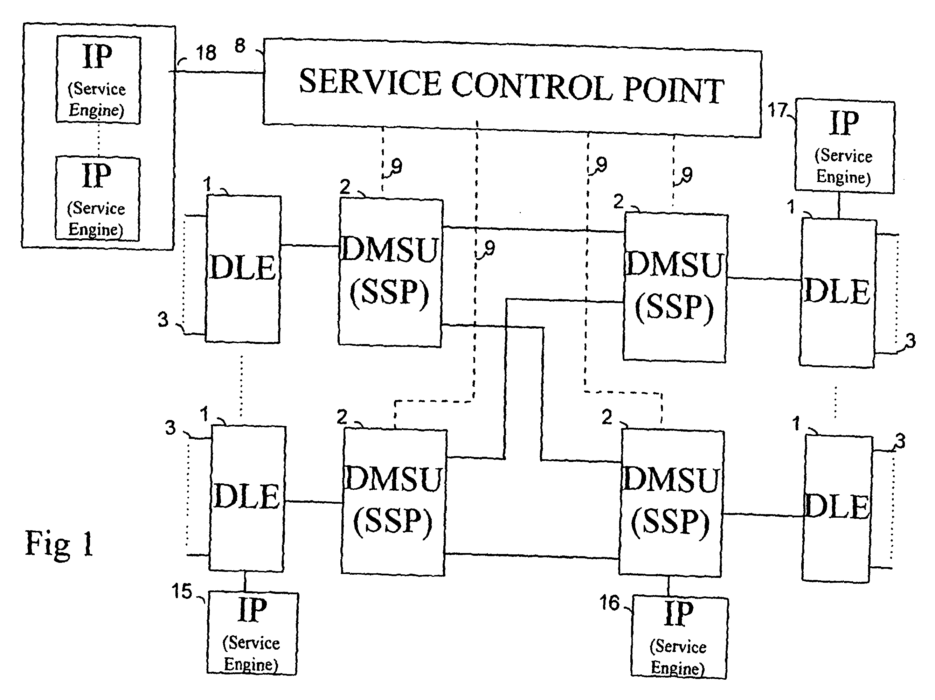

Referring now to Figure 1 digital telecommunications networks, that is to say those which operate using time division multiplex channels normally comprise a number of digital local exchanges 1 each of which is parented on at least one of a number of fully interconnected digital main switching units 2. Each local exchange 1 provides service to a number of customer lines 3 any one of which may be switched through the network to any other line on any of the exchanges and to lines connected to other systems (not shown). The main PSTN in the United Kingdom is of this form.

The exchange switches 1 and 2 each have a processor control system associated therewith to provide intelligent handling of switching. Thus the processor unit associated with one of the switches 1 will receive transmitted digits from a customer line 3 which digits will indicate either a call to another line 3 on the same exchange 1 or requirement for connection to another point in the network. Where connection to another point in the network is required signalling channels are used to pass information to one of the DMSUs and thence to a destination exchange possibly through a further DMSU 2. Positive interconnection between a line 3 on a first exchange 1 to line 3 on the destination exchange only occurs if the destination line 3 is available.

The rapid switching capability of a digital network means that a connection does not need to be completed until all of the digits defining a destination have been received. Traditionally digital networks use service platforms (not shown) to provide special services to the network customers such as (e.g.) freephone 0800, local charging, premium rate services and the like. Specific service platforms will be located within the network at say one of the DMSUs 2 and, if a customer dials a network access code for one of the special services the call is connected to the appropriate service platform through the network, the service platform analysing subsequent digits and connecting via a special switch back through the network to the required destination.

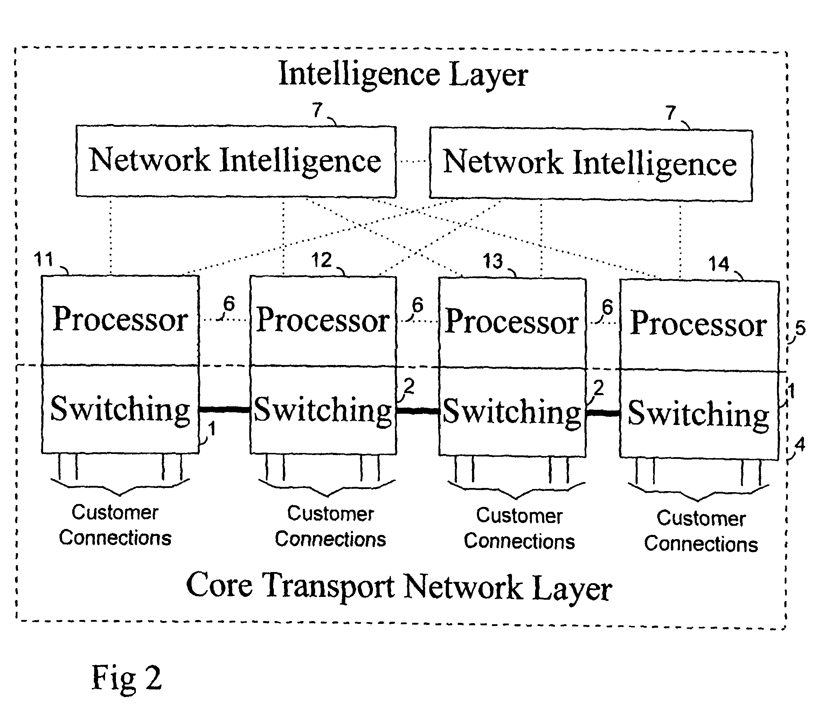

Providing such special platforms and additional switching capability can delay the introduction of new services. However referring additionally to Figure 2, it is possible to consider a telephone network as comprising a number of layers. A first layer, the core transport network layer 4, comprises the switching capability and trunking of the exchange network 1 and 2 with the trunking in-between while the processors 11, 12, 13 and 14 of the exchanges 1 and 2 represent an intelligence layer 5. A virtual path exists shown by dotted lines 6 between the computer facilities of the network. As C7 signalling is used to transfer information it is possible to add another level of intelligence here represented as network intelligence 7 having communications access with the processors of the switching units. Now, if a processor reaches a point at which it requires additional processing power it may refer to the higher intelligence layer 7 for instructions. Thus all that the processors of a switching unit 1, 2 need to do is to recognise a requirement for additional service functionality. The processors may be programmed to recognise customer action or customer signalling representing a trigger to additional service functionality. Once triggered the processor refers relevant data such as the identity of the calling line, the digits dialled, special class of service to the network intelligence layer 7 which may instruct the processor to perform specific tasks within its capability for handling a particular call.

Thus referring back to Figure 1 the intelligent network comprises service switching points which may be the digital local exchanges 1 or digital main switching units 2 and a service control point 8 (of which there may be several) to which the exchange processors refer via virtual signalling paths (shown dotted) 9. Specialised service engines or intelligent peripherals 15, 16 and 17 associated with specific service switching points may provide dedicated functions and calling lines 3 may be switched to these peripherals through the network as a result of instructions from the service control point 8. Thus, for example an intelligent peripheral may be equipped to provide voice prompts, message storage functionality or specific data storage or programming function. Alternatively or additionally intelligent peripherals 18 may stand alone from dedicated SSPs but still be accessible through the network either on a switched path or by direct connection (not shown).

The present invention is described with reference to an intelligent network although it will be appreciated that the kind of service here noted could be provided using dedicated service platforms.

The services to be described herein provide callers who know a code or a telephone number with additional information in relation to that code or telephone number. A first such service enables a customer to determine the location of a telephone call which a code has been provided and/or charges associated with making a call from his current location to that code. Further, the code may be deciphered to indicate to the customer special service access.

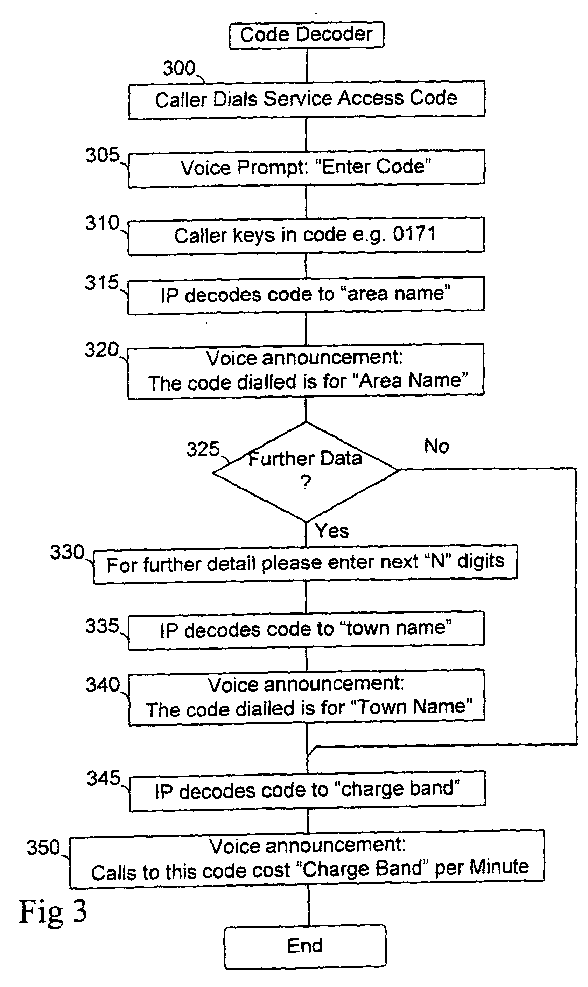

Referring to Figure 3, and to Figure 1, when a caller dials the service access code, at step 300, the processor of local exchange 1 will be triggered and will signal to the service control point 8 the service request and calling line identity of originating calling line 3. The service control point 8 will instruct the SSP 2, for example, to connect the calling line 3 to one of the intelligent peripherals which can provide voice prompts and at the same time will instruct the SSP to collect digits dialled by the caller.

At step 305, the intelligent peripheral provides a voice prompt to the caller inviting entry of the code for which information is required.

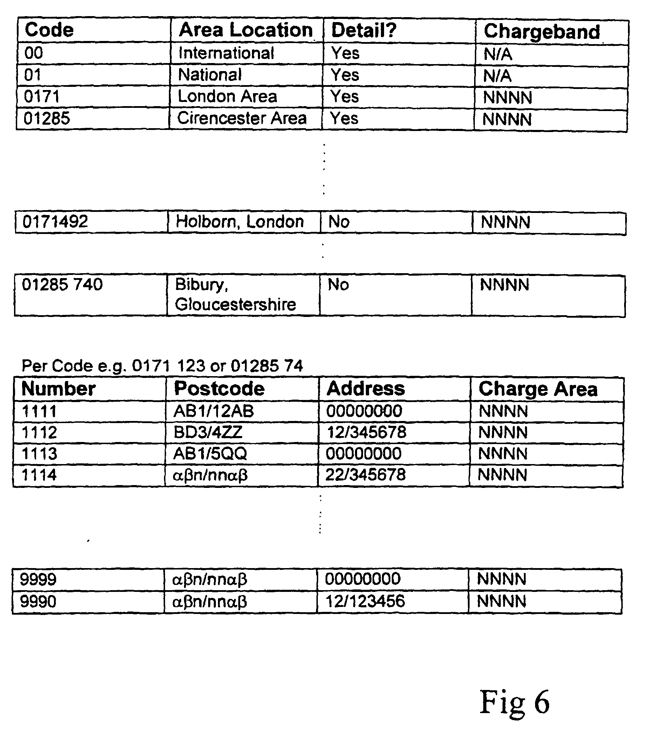

Assuming that the caller enters a code, for example, in the UK the code for central London (0171), then referring to Figure 6, additionally, when the digits are transferred to the service control point the data access indicates that the call is to the London area. The data is therefore transferred to an appropriate intelligent peripheral and the SSP is again instructed to connect the caller to the IP. The caller will now receive a voice announcement as indicated at step 315, indicating that the code dialled is for the London area.

Only a limited number of codes are shown in the data store although it will be appreciated that the directory services database of the PSTN operator will hold substantially more information than is shown here.

Considering now step 325, the SCP 8 is programmed to consider whether a flag is set in the database indicating that the geographical location can be narrowed down from additional digits. If the detail flag in the data store is specifically set then the customer is invited at step 330 to key a further number of digits which may be defined by the detail field. Thus, for London area codes, at step 330, the voice announcement peripheral will invite the customer to key a further three digits.

Assuming that the customer enters these digits then, for example, 492 will be decoded as indicating the Holborn London area in a voice announcement at step 340.

Additionally, the charge area shown against the code under charge band in the data store 6 is decoded at step 345 and used in conjunction with the customer calling line identity and the current time of day to provide a voice announcement to the customer indicating the cost per minute of calls to the dialled area.

It will be appreciated that where there are several charging periods, for example evening charges, weekend charges or peak charges depending upon the time of day or day of week then the system may provide information concerning all of the potential time periods. Alternatively, the customer may be invited to indicate in which period he wished to know the charge.

Although, for simplicity only a limited number of steps are shown in Figure 3, it will be appreciated that if the customer line 3 from which the call originated clears at any point then the SCP 8 will instruct the SSP 2 to clear the call or the SSP 2 may simply clear the call through the network to the intelligent peripheral.

It will also be realised that if the customer is invited to enter further information if, within a predetermined period, no such entry is made, then the system will skip to the last section. Alternatively, the customer may be invited to enter, for example #, to skip to the charge band for the dialled area code.

A second example of area location in the data store is given in which the code 01285 enables the charge band to be determined and give an approximate geographical location whereas a further three digits 740 are required to identify Bibury, Gloucestershire.

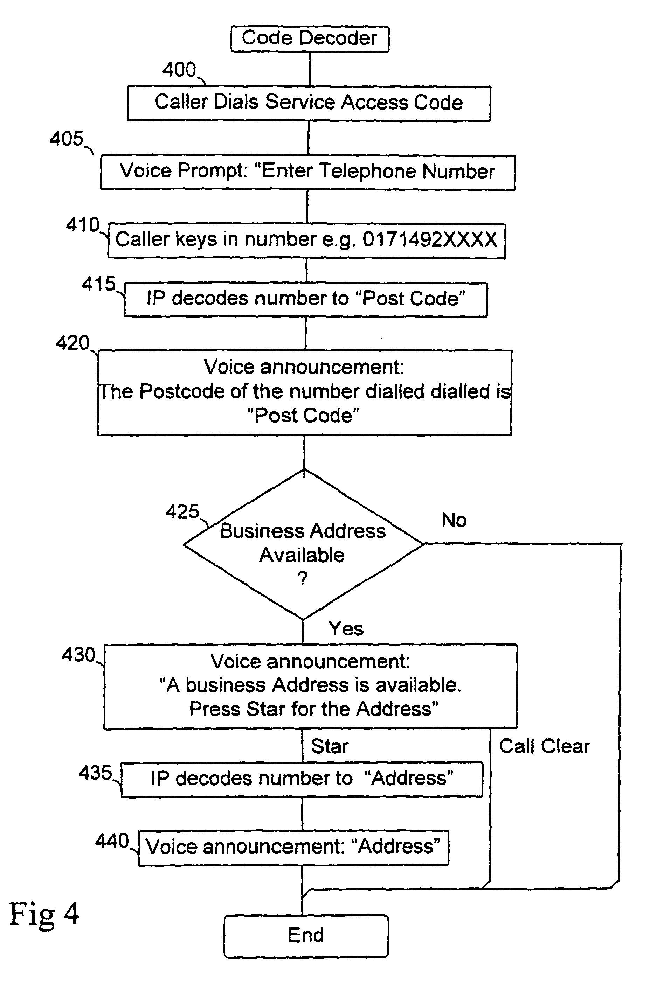

In a more detailed development of the service, referring now also to Figure 4, a customer may dial a service access code for obtaining a post code or ZIP code.

Again, when the appropriate access code is dialled at step 400, the SSP 2 will refer to the SCP 8 which will instruct the SSP to connect the calling line 3 through the network to a voice announcement IP 15 and to collect and forward the digits dialled by the caller.

At step 405, the peripheral 15 gives a voice announcement advising the calling line customer to enter a telephone number. Assuming that the caller does so as indicated at step 410, the received digits are translated using the per code data store the postcode of column two relevant to the signalled number is passed to an intelligent peripheral at step 415 to enable a voice announcement to the customer of the actual postcode. This service may be used where a customer knows, for example, an address and telephone number but does not have the actual postcode or ZIP code.

In order to protect the customer the system does not normally provide details of a narrower nature than the postcode. However, at customer option, the address may be made available to the calling customer. If this is the case that a business address is available this will be identified at step 425 of Figure 4 by interrogation of the address column which identifies an intelligent peripheral number and a data location of an appropriate voice announcement within the peripheral. At step 430 the customer may be invited to key * for example to obtain the additional address information and at steps 425 and 430 the SSP connects the calling customer through the network to an to an intelligent peripheral in response to instructions from the SCP 8.

Again, if at any time the customer clears the call or does not enter a complete telephone number or a time-out occurs the SCP or intelligent peripheral may instruct the call to be cleared down. Additionally, as for Figure 3, on completion of announcement or postcode and/or address information the system may provide .charge band information.

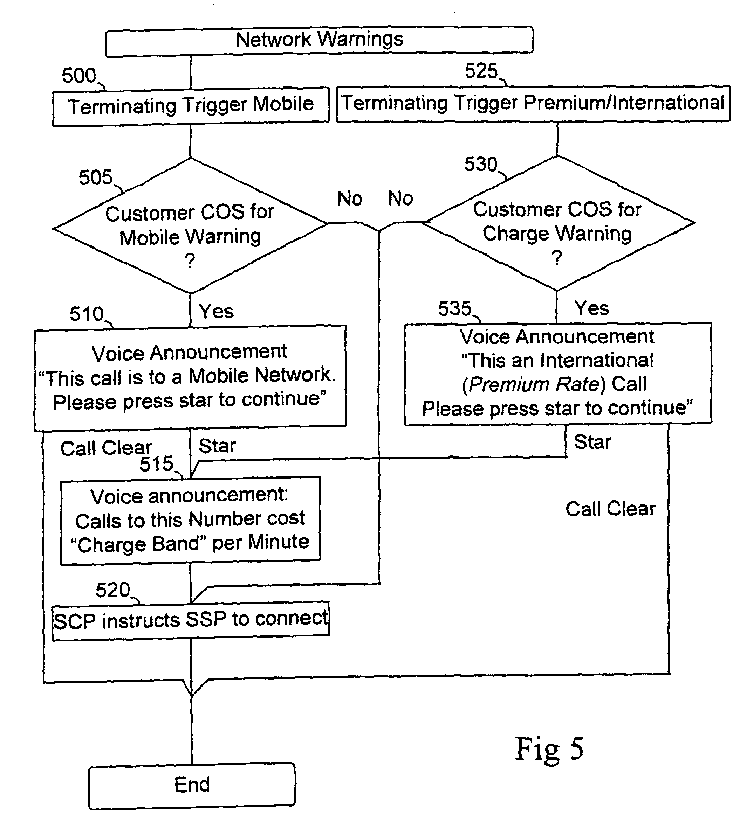

Referring now to Figures 1 and 5, either for all customers or at a customer's request as indicated by customer's class of service calls to specific services may result in a warning to the customer. For example, some customers may not wish to make calls that may be insecure as a result of a destination radio link being involved. In this case, when signalling is transferred across the network from an originating service switching point 1 to a destination service switching point 1 the destination SSP may be triggered (or the originating SSP may be triggered on the code) and will transfer data to the SCP 8 which includes the class of service of the originating customer, the code dialled and CLI of the originating caller for example. This is shown as a terminating trigger mobile at step 500 of figure 5 which leads to the class of service being interrogated at step 505 and, if the customer is not subscribing to the service or has not given an indication that requires warning then the SCP 8 instructs the SSP 2 to effect connection of the call across the network.

If however the customer does require warning then at step 510 the calling line 3 is connected through the network to a voice announcement peripheral, say 17, and is advised that the call is on a mobile network. The customer may now be invited to confirm, for example by pressing the star button on the telephone, if he wishes the call to be connected. Assuming that the call is to be connected then at step 515 the customer may be advised of the potential cost of the connected call based on the customer's CLI and the destination of the call. As previously indicated for customers who have not subscribed to the service the SCP 8 now instructs the SSP to connect the call through the network once confirmation has been received.

A similar service may be operated for customers who wish to avoid inadvertently calling premium rate services, for example those in which the customer is charged a high rate to listen to messages at a distant point. In a similar manner, at step 525, a code trigger from the originating service switching point or a destination trigger at the terminating SSP will result in CLI, class of service and dialled telephone number being forwarded by the signalling channel to the SCP 8 for instruction. Again, if the customer is identified at step 530 as not subscribing or as not requiring the appropriate service at step 520 the SCP instructs the SSP to connect the call through the network.

Otherwise the customer is again connected through the network by the SSP acting under instruction of the SCP 8 to an appropriate intelligent peripheral, say 16, which has a voice announcement facility to provide a statement that this is a premium rate number and requiring the customer to confirm that the call should be connected.

A similar trigger operates for codes which indicate international calls which may result in a higher than normal charging rate to the customer.

## Claims

1. A telecommunications network (1,2) including means to store data identifying a feature associated with at least a code portion of a telephone number, means responsive to signals transmitted from a calling customer line (3) which signals identify the code portion, **characterised in that** the network further includes means to decode the data into a respective description of the feature associated with the transmitted code and means to transmit to the calling customer line an audible description of the decoded feature.

2. A telecommunications network as claimed in claim 1, further **characterised in that** the feature identifies a geographic location.

3. A telecommunications network as claimed in claim 1 or claim 2, further **characterised in that** the decoded feature identifies a service code used by one or more organisations to facilitate the delivery of packages to a specific geographic location.

4. A telecommunications network as claimed in claim 1, claim 2 or claim 3, further **characterised in that** the decoded feature identifies a network type associated with the code whereby customers may be advised of the network type prior to completion of a call thereto.

5. A telecommunications network as claimed in claim 4, further **characterised in that** it is adapted so that a call to a specific identified network type is not connected prior to confirmation of call connection by the customer.

6. A telecommunications network as claimed in any preceding claims, further **characterised in that** the feature identifies calls to codes involving higher charging rates so that the customer is informed of a high cost call prior to effecting connection.

7. A telecommunications network as claimed in claim 6, further **characterised in that** it is adapted so that prior to connection of a call through the network the customer is required to provide confirmation of the call connection.

8. A telecommunications network as claimed in claim 4, claim 5, claim 6 or claim 7, further **characterised in that** the network is adapted to store a class of service in respect of each potential calling line and only where customers have requested access to the service is the information given.

## Patentansprüche

1. Fernmeldenetz (1, 2) mit einer Einrichtung, um Daten zu speichern, die ein Merkmal identifizieren, das mit wenigstens einen Teil des Kodes einer Telefonnummer verbunden ist, einer Einrichtung, die auf Signale reagiert, die von der Leitung (3) des anrufenden Kunden gesendet werden, wobei die Signale den Teil des Kodes identifizieren, **dadurch gekennzeichnet, dass** das Netz weiter eine Einrichtung enthält, um die Daten in eine entsprechende Beschreibung des Merkmals, das mit dem gesendeten Code verbunden ist, zu dekodieren, und eine Einrichtung, um eine hörbare Beschreibung des dekodierten Merkmals an die Leitung des Kunden zu senden.

2. Fernmeldenetz nach Anspruch 1, das weiter **dadurch gekennzeichnet ist, dass** das Merkmal einen geografischen Standort identifiziert.

3. Fernmeldenetz nach Anspruch 1 oder Anspruch 2, weiter **dadurch gekennzeichnet, dass** das dekodierte Merkmal einen Kode eines Dienstes identifiziert, der von einer oder mehreren Organisationen verwendet wird, um die Lieferung von Paketen an einen bestimmten geografischen Standort zu erleichtern.

4. Fernmeldenetz nach Anspruch 1, Anspruch 2 oder Anspruch 3, weiter **dadurch gekennzeichnet, dass** das dekodierte Merkmal einen Netzwerktyp identifiziert, der mit dem Kode verbunden ist, wodurch Kunden von dem Netzwerktyp unterrichtet werden können, bevor ein Anruf dahin durchgestellt wird.

5. Fernmeldenetz nach Anspruch 4, weiter **dadurch gekennzeichnet, dass** es derart eingerichtet ist, dass ein Anruf an einen bestimmten identifizierten Netzwerktyp nicht vor der Bestätigung der Anrufverbindung durch den Kunden verbunden wird.

6. Fernmeldenetz nach einem der vorangehenden Ansprüche, weiter **dadurch gekennzeichnet, dass** das Merkmal Anrufe an Kodes identifiziert, die mit höheren Gebührenraten verbunden sind, sodass der Kunde von einem Anruf mit hohen Kosten informiert ist, bevor die Verbindung bewirkt wird.

7. Fernmeldenetz nach Anspruch 6, weiter **dadurch gekennzeichnet, dass** es derart eingerichtet ist, dass von dem Kunden vor dem Verbinden eines Anrufs durch das Netz verlangt wird, eine Bestätigung der Anrufverbindung zu liefern.

8. Fernmeldenetz nach Anspruch 4, Anspruch 5, Anspruch 6 oder Anspruch 7, weiter **dadurch gekennzeichnet, dass** das Netz dazu eingerichtet ist, eine Klasse des Dienstes bezüglich jeder potenziell anrufenden Leitung zu speichern, und die Information nur auszugeben, wenn Kunden Zugang zu dem Dienst angefragt haben.

## Revendications

1. Réseau de télécommunications (1, 2) comprenant un moyen de mémoriser des données identifiant une caractéristique associée à au moins une partie de code d'un numéro de téléphone, un moyen sensible à des signaux transmis depuis une ligne d'usager appelant (3), lesquels signaux identifient la partie de code, **caractérisé en ce que** le réseau comprend en outre un moyen pour décoder les données en une description respective de la caractéristique associée au code transmis, et un moyen de transmettre, à la ligne d'usager appelant, une description audible de la caractéristique décodée.

2. Réseau de télécommunications selon la revendication 1, **caractérisé en outre en ce que** la caractéristique identifie un emplacement géographique.

3. Réseau de télécommunications selon la revendication 1 ou la revendication 2, **caractérisé en outre en ce que** la caractéristique décodée identifie un code de service utilisé par une ou plusieurs organisations pour faciliter la délivrance d'un ensemble de prestations à un emplacement géographique particulier.

4. Réseau de télécommunications selon la revendication 1, la revendication 2 ou la revendication 3, **caractérisé en outre en ce que** la caractéristique décodée identifie un type de réseau associé au code, grâce à quoi les usagers peuvent être avisés du type du réseau avant l'exécution d'un appel vers celui-ci.

5. Réseau de télécommunications selon la revendication 4, **caractérisé en outre en ce qu'**il est conçu de telle sorte qu'un appel vers un type de réseau spécifique identifié n'est pas connecté avant la confirmation de la connexion de l'appel par l'usager.

6. Réseau de télécommunications selon l'une quelconque des revendications précédentes, **caractérisé en outre en ce que** la caractéristique identifie des appels vers des codes impliquant des taux de taxation supérieurs, de sorte que l'usager est informé d'un appel à coût élevé avant d'effectuer la connexion.

7. Réseau de télécommunications selon la revendication 6, **caractérisé en outre en ce qu'**il est conçu de sorte que, avant la connexion d'un appel par l'intermédiaire du réseau, il est demandé à l'usager de fournir une confirmation de la connexion de l'appel.

8. Réseau de télécommunications selon la revendication 4, la revendication 5, la revendication 6 ou la revendication 7, **caractérisé en outre en ce que** le réseau est conçu pour mémoriser une classe de service pour ce qui concerne chaque ligne appelante potentielle, et les informations ne sont données que lorsque les usagers ont demandé l'accès au service.
